# EUROPÄISCHE PATENTSCHRIFT

(11) **EP 4 430 733 B1**
(45) Veröffentlichungstag und Bekanntmachung des Hinweises auf die Patenterteilung: **12.08.2026**
(21) Anmeldenummer: 22809143.5
(22) Anmeldetag: 26.10.2022
(51) Int. Cl.: H02K 3/28, H02K 3/50, H02K 5/22

(54) **KONTAKTIERUNGSBAUSATZ UND VERFAHREN ZUR HERSTELLUNG VON ELEKTRISCHEN MASCHINEN UNTERSCHIEDLICHER LEISTUNGSKLASSEN**
CONTACTING KIT AND METHOD FOR PRODUCING ELECTRIC MACHINES HAVING DIFFERENT POWER CLASSES
KIT DE MISE EN CONTACT ET PROCÉDÉ DE PRODUCTION DE MACHINES ÉLECTRIQUES AYANT DIFFÉRENTES CLASSES DE PUISSANCE

(30) Priorität: 09.11.2021 DE 102021212577
(43) Veröffentlichungstag der Anmeldung: 18.09.2024
(73) Patentinhaber: Schaeffler Technologies AG & Co. KG, 91074 Herzogenaurach (DE)
(72) Erfinder: GOHS, Axel, 81737 München (DE); CHARLES, David, 81737 München (DE)
(74) Vertreter: Schaeffler Technologies
(86) Internationale Anmeldenummer: PCT/EP2022/080003
(87) Internationale Veröffentlichungsnummer: WO 2023/083621

(56) Entgegenhaltungen:
- EP-A1- 3 567 703
- WO-A1-2011/128177
- WO-A1-2019/212095
- WO-A1-2021/219368
- US-A- 4 748 355

## Beschreibung

Die Erfindung betrifft einen Kontaktierungsbausatz zur Realisierung einer Kontaktierung zwischen einer Energieversorgungseinrichtung und Spulen einer elektrischen Maschine, sowie ein Verfahren zur Herstellung von elektrischen Maschinen unterschiedlicher Leistungsklassen.

In der Automobilindustrie werden im Rahmen der Produktion von Kraftfahrzeugen in zunehmendem Maße elektrische Maschinen verbaut. Beispielsweise produzieren im Markt agierende Automobilhersteller Fahrzeuge mit Hybridantrieben, d. h. einem Verbrennungsmotor und einer elektrischen Maschine, oder mit vollelektrischen Antrieben. Auch kommen elektrische Maschinen nicht nur als Antriebe zum Einsatz, sondern auch bei anderen Anwendungen, wie beispielsweise Range-Extendern.

Die produzierten Fahrzeuge besitzen je nach Größe bzw. Gewicht des Kraftfahrzeuges und Preissegment elektrische Maschinen unterschiedlicher Leistungsklassen.

Das entsprechende Herstellungsverfahren dieser elektrischen Maschinen gestaltet sich derart, dass Spulen in verschiedene Statoren, die unterschiedlichen Leistungsklassen zuzuordnen sind, gleichermaßen eingezogen werden und anschließend in einem sog. Klemmkasten zur Realisierung eines Wicklungsschemas der betreffenden Leistungsklasse miteinander kontaktiert werden. Wicklungsschemata unterschiedlicher Leistungsklassen sind beispielsweise Sternschaltungen für hohe Spitzendrehmomente bei niedrigen Drehzahlen und Dreiecksschaltungen für hohe Dauerdrehmomente bei hohen Drehzahlen. Daneben existieren auch Reihen- und Parallelschaltungen in Stern oder Dreieckkonfiguration sowie Doppelstern- und Doppeldreieckschaltungen als weitere verfeinerte Abstufungen.

Das Zusammenführen der Enden der Spulen in dem Klemmkasten und das entsprechende Kontaktieren erfolgt in der Regel manuell.

Eine gewisse Abhilfe, das Produktionsverfahren zu vereinfachen und eine Variabilität der Leistungsklassen zu schaffen, beschreibt die Veröffentlichungsschrift DE 10 2000 1702 09479 A1.

Diese zeigt einen Klemmkasten, der eingerichtet ist, im Fahrbetrieb des Kraftfahrzeuges das Wicklungsschema der Spulen, elektrisch gesteuert, zu verändern, damit die entsprechende elektrische Maschine in ein anderes Wirkungsgradkennfeld bzw. eine andere Leistungsklasse wechselt. Für die Produktion bedeutet das, dass nur eine Art von Kontaktierung in dem Klemmkasten zur realisieren ist und sich damit das Verfahren vereinfacht.

Dieser Klemmkasten ist allerdings elektrisch aufwendig und teuer. Zudem ist die Variabilität der Wicklungsschemata im Fahrbetrieb in vielen Anwendungsfällen schlicht nicht notwendig, weil Fahrzeuge verschiedener Klassen und Preissegmente mit einem festgelegten Wicklungsschema gut auskommen.

Die WO 2011 128 177 A1 beschreibt eine Anschlussvorrichtug mit veränderlicher elektrischer Vbingung zwischen Leiteranschlüssen.

In der WO 2019 212 095 A1 ist ein Klemmblock zum Anschluss einen Induktionsmotors gezeigt.

Aus der US 4 748 355 A ist ein elektrischer Verbinder mit lösbarem Laststeuerelement für mehrfach anschließbare Lasten bekannt.

Es ist eine Aufgabe der Erfindung, einen Kontaktierungsbausatz und ein Verfahren zur Herstellung von elektrischen Maschinen unterschiedlicher Leistungsklassen zu schaffen, die eine automatisierte Herstellung der elektrischen Maschinen ermöglichen. Zumindest ist es Aufgabe der Erfindung, eine alternative Kontaktierung und ein alternatives Verfahren zur Herstellung von elektrischen Maschinen zu schaffen.

Diese Aufgabe(n) wird/werden durch einen Kontaktierungsbausatz gemäß Patentanspruch 1 und ein Verfahren gemäß Patentanspruch 7 gelöst. Bevorzugte

Ausführungsformen sind Gegenstand der jeweiligen abhängigen Patentansprüche. Gemäß einem Aspekt der Erfindung beinhaltet ein Kontaktierungsbausatz zur Realisierung einer Kontaktierung zwischen einer Energieversorgungseinrichtung und Spulen einer elektrischen Maschine für ein Kraftfahrzeug:
einen ersten Kontaktierungssatz mit einer Vielzahl von Kontaktierungselementen, die bestimmungsgemäß eine Kontaktierung zwischen der Energieversorgungseinrichtung und einer bestimmten Anordnung vorstehender Enden der in einen Stator eingezogenen Spulen festlegen;
einen zweiten Kontaktierungssatz mit einer Vielzahl von Kontaktierungselementen, die bestimmungsgemäß eine Kontaktierung zwischen der Energieversorgungseinrichtung und der bestimmten Anordnung vorstehender Enden festlegen; und
einen Trägerkörper, in den die Kontaktierungselemente des ersten und zweiten Kontaktierungssatzes einsetzbar sind; wobei
die Kontaktierungselemente des ersten und zweiten Kontaktierungssatzes derart ausgebildet sind, dass sie, unabhängig davon, welcher des ersten oder zweiten Kontaktierungssatzes in den Trägerkörper eingesetzt ist, an definierten Positionen auf einer Außenoberfläche des Trägerkörpers zur Kontaktierung mit den vorstehenden Enden freiliegen, sodass für die bestimmte Anordnung vorstehender Enden der Spulen durch das wahlweise Einsetzen der Kontaktierungselemente des ersten oder zweiten Kontaktierungssatzes in den Trägerkörper ein erstes oder ein zweites Wicklungsschema der Spulen realisierbar ist.

Erfindungsgemäß beinhaltet der Kontaktierungsbausatz weiterhin:
einen dritten Kontaktierungssatz mit einer Vielzahl von Kontaktierungselementen, die bestimmungsgemäß eine Kontaktierung zwischen der Energieversorgungseinrichtung und der bestimmten Anordnung vorstehender Enden der in den Stator eingezogenen Spulen festlegen; und
einen vierten Kontaktierungssatz mit einer Vielzahl von Kontaktierungselementen, die bestimmungsgemäß eine Kontaktierung zwischen der Energieversorgungseinrichtung und der bestimmten Anordnung vorstehender Enden festlegen; wobei
die Kontaktierungselemente des dritten und vierten Kontaktierungssatzes derart ausgebildet sind, dass sie, unabhängig davon, welcher des dritten oder vierten Kontaktierungssatzes in den Trägerkörper eingesetzt ist, an den definierten Positionen auf der Außenoberfläche des Trägerkörpers zur Kontaktierung mit den vorstehenden Enden freiliegen, sodass für die bestimmte Anordnung vorstehender Enden der Spulen durch das wahlweise Einsetzen der Kontaktierungselemente des dritten oder vierten Kontaktierungssatzes in den Trägerkörper ein drittes oder viertes Wicklungsschema der Spulen realisierbar ist.

Die bestimmte Anordnung der vorstehenden Enden ist dahingehend bestimmt, dass eine Reihenfolge der Enden und räumliche Positionen der Enden, insbesondere deren Abstände, definiert sind.

Der erfindungsgemäße Kontaktierungsbausatz ist bevorzugt für Spulen bestimmt, die aus Stabwicklung realisiert sind und deren Enden eigensteif in der vorbestimmten Anordnung verharren. Wenn die Spulen aus Drahtwicklungen aufgebaut sind, deren Enden nicht eigensteif ortsfest bleiben, ist bevorzugt ein Adapterelement vorgesehen, das die Enden in der Anordnung hält.

Der Kontaktierungsbausatz ist bevorzugt für elektrische Maschinen vorgesehen, die im Motor- und/oder Generatorbetrieb arbeiten können und die beispielsweise als Antriebsaggregat des Kraftfahrzeuges eingesetzt werden. Die Energieversorgungseinrichtung beinhaltet bevorzugt einen Hochspannungs-Akkumulator (beispielsweise 400 V oder 800 V) und einen Wechselrichter bzw. Umrichter, der von dem Akkumulator gelieferten Gleichstrom in Wechselstrom wandelt. Die Kontaktierungselemente und der Trägerkörper sind bevorzugt für diesen Einsatzbereich dimensioniert, d. h. besitzen beispielsweise hierfür notwendige Isolationseigenschaften und Stromfestigkeiten.

Die Kontaktierungselemente sind bevorzugt aus Metall gebildet und bevorzugt monolithische Biege-/Stanzteile, die in gewünschte Formen gebogen sind, derart, dass sie an den definierten Positionen freiliegen. Die Kontaktierungselemente besitzen diesbezüglich beispielsweise gebogene Laschen und/oder gebogene Abschnitte.

Gemäß einem weiteren bevorzugten Aspekt des Kontaktierungsbausatzes ist dieser derart ausgebildet, dass
die Kontaktierungselemente des ersten Kontaktierungssatzes m Kontaktierungszungen zur Verbindung mit der Energieversorgungseinrichtung einerseits und mit m Strängen des ersten aus den Spulen gebildeten Wicklungsschemas andererseits, und mindestens ein einen Sternpunkt einer Sternschaltung bildendes Brückenelement beinhalten; wobei
das erste Wicklungsschema n>1 parallele Spulen in jedem der m Stränge beinhaltet, und für die entsprechende Realisierung die Kontaktierungselemente des ersten Kontaktierungssatzes sowie der Trägerkörper derart konfiguriert sind, dass nach Einsetzen der Kontaktierungselemente in den Trägerkörper:
   - jede der m Kontaktierungszungen an n der definierten Positionen auf der Außenoberfläche des Trägerkörpers zur Kontaktierung mit den vorstehenden Enden freiliegt, und
   - das sternpunktbildende Brückenelement an n*m der definierten Positionen auf der Außenoberfläche des Trägerkörpers zur Kontaktierung mit den vorstehenden Enden freiliegt.

Gemäß einem weiteren bevorzugten Aspekt des Kontaktierungsbausatzes ist dieser derart ausgebildet, dass
die Kontaktierungselemente des zweiten Kontaktierungssatzes m Kontaktierungszungen zur Verbindung mit der Energieversorgungseinrichtung einerseits und mit m Strängen des zweiten aus den Spulen gebildeten Wicklungsschemas andererseits, und ein einen Sternpunkt einer Sternschaltung bildendes Brückenelement und eine Vielzahl von Reihenbrückenelementen beinhalten; wobei
das zweite Wicklungsschema n>1 in Reihe geschaltete Spulen in jedem der m Stränge beinhaltet, und für die entsprechende Realisierung die Kontaktierungselemente des zweiten Kontaktierungssatzes sowie der Trägerkörper derart konfiguriert sind, dass nach Einsetzen der Kontaktierungselemente in den Trägerkörper:
   - jede der m Kontaktierungszungen an einer der definierten Positionen auf der Außenoberfläche des Trägerkörpers zur Kontaktierung mit den vorstehenden Enden freiliegt,
   - das sternpunktbildende Brückenelement an m definierten Positionen auf der Außenoberfläche des Trägerkörpers zur Kontaktierung mit den vorstehenden Enden freiliegt, und
   - jedes der Reihenbrückenelemente an zwei definierten Positionen auf der Außenoberfläche des Trägerkörpers zur Kontaktierung mit den vorstehenden Enden freiliegt.

Gemäß einem weiteren bevorzugten Aspekt des Kontaktierungsbausatzes ist dieser derart ausgebildet, dass
die Kontaktierungselemente des dritten Kontaktierungssatzes m Kontaktierungszungen zur Verbindung mit der Energieversorgungseinrichtung einerseits und mit m Strängen des dritten aus den Spulen gebildeten Wicklungsschemas andererseits, und m Verbindungsbrückenelemente beinhalten; wobei
das dritte Wicklungsschema eine Dreieckschaltung ist und n>1 parallel geschaltete Spulen in jedem der m Stränge beinhaltet, und
für die entsprechende Realisierung des dritten Wicklungsschemas die Kontaktierungselemente des dritten Kontaktierungssatzes sowie der Trägerkörper derart konfiguriert sind, dass nach Einsetzen der Kontaktierungselemente in den Trägerkörper:
   - jede der m Kontaktierungszungen an n der definierten Positionen auf der Außenoberfläche des Trägerkörpers zur Kontaktierung mit den vorstehenden Enden freiliegt, und
   - jedes der m Verbindungsbrückenelemente mit einer der m Kontaktierungszungen kontaktiert ist und an n der definierten Positionen auf der Außenoberfläche des Trägerkörpers zur Kontaktierung mit den vorstehenden Enden freiliegt.

Gemäß einem weiteren bevorzugten Aspekt des Kontaktierungsbausatzes ist dieser derart ausgebildet, dass
die Kontaktierungselemente des vierten Kontaktierungssatzes m Kontaktierungszungen zur Verbindung mit der Energieversorgungseinrichtung einerseits und mit m Strängen andererseits, und eine Vielzahl von Reihenbrückenelemente beinhalten; wobei
das vierte Wicklungsschema eine Dreieckschaltung ist und n>1 in Reihe geschaltete Spulen in jedem der m Stränge beinhaltet; und
für die entsprechende Realisierung des vierten Wicklungsschemas die Kontaktierungselemente des vierten Kontaktierungssatzes sowie der Trägerkörper derart konfiguriert sind, dass nach Einsetzen der Kontaktierungselemente in den Trägerkörper:
   - jede der m Kontaktierungszungen an zwei der definierten Positionen auf der Außenoberfläche des Trägerkörpers zur Kontaktierung mit den vorstehenden Enden freiliegt, und
   - jedes der Reihenbrückenelemente an zwei der definierten Positionen auf der Außenoberfläche des Trägerkörpers zur Kontaktierung mit den vorstehenden Enden freiliegt.

Neben den vorstehend erläuterten vier Wicklungsschemata (Stern-Parallel; Stern-Reihe; Dreieck-Parallel; Dreieck-Reihe) kann der erfindungsgemäße Kontaktierungsbausatz noch weitere Kontaktierungssätze beinhalten, die beispielsweise folgende Wicklungsschemata realisieren:
- Doppel-Stern, d. h. zwei unabhängige Sternschaltungen ohne Parallel-/Reihenschaltung der Spulen;
- Doppel-Dreieck, d. h. zwei unabhängige Dreieckschaltungen ohne Parallel-/Reihenschaltung der Spulen;
- Doppel-Stern, d. h. zwei unabhängige Sternschaltungen mit jeweils Reihenschaltungen von Spulen, für mehrpolige elektrischen Maschinen;
- Doppel-Dreieck, d. h. zwei unabhängige Dreieckschaltungen mit jeweils Parallelschaltungen von Spulen, für mehrpolige elektrischen Maschinen.

Gemäß einem weiteren bevorzugten Aspekt des Kontaktierungsbausatzes ist dieser derart ausgebildet, dass
der Trägerkörper m Öffnungen für die m Kontaktierungszungen beinhaltet, in die die Kontaktierungszungen in einer vorbestimmten Richtung eingeführt werden, wobei die Kontaktierungszungen gebogene Laschen aufweisen, die nach dem Einführen der Kontaktierungszungen auf der Außenoberfläche an den entsprechenden definierten Positionen freiliegen, und das sternpunktbildende Brückenelement, die Reihenbrückenelemente und/oder die Verbindungsbrückenelemente mit gebogenen Abschnitten nach dem Einführen der Kontaktierungszungen in die Öffnungen in den Trägerkörper derart eingesetzt werden, dass sie in einer zu den Kontaktierungszungen versetzten Ebene verlaufen, die Kontaktierungszungen kreuzen und an entsprechenden der definierten Positionen freiliegen.

Zwischen den verschiedenen Ebenen sind bevorzugt isolierende Zwischenlagen angeordnet.

Der Trägerkörper ist bevorzugt so ausgestaltet, dass die Positionen der freiliegenden Kontaktierungselemente sich in zwei parallelen Ebenen auf der Außenoberfläche des Trägerkörper befinden. Bevorzugt gibt es insgesamt (n*m)*2 Positionen, an denen die Kontaktierungselemente freiliegen.

Die gebogenen Laschen und/oder die gebogenen Abschnitte sind bevorzugt um 90° oder 180° gebogen.

Die Anzahl der Stränge, d. h. der Parameter m, ist bevorzugt m = 3, und die Anzahl der Spulen, d. h. der Parameter n, ist bevorzugt n=2.

Ein erfindungsgemäßes Verfahren zur Herstellung von elektrischen Maschinen unterschiedlicher Leistungsklassen, beinhaltet bevorzugt folgende Schritte:
i. Bereitstellen einer Vielzahl von Statoren, die jeweils einer der unterschiedlichen Leistungsklassen zuzuordnen sind, insbesondere dadurch, dass sie unterschiedliche Statorlängen entlang ihrer jeweiligen Längsachse besitzen;
ii. Einziehen in jeden der Statoren eine gleiche Anzahl von Spulen, derart, dass Enden jeder der Spulen an einer Stirnseite des jeweiligen Stators vorliegen;
iii. Führen der an der Stirnseite des jeweiligen Stators vorliegenden Enden derart, dass die Enden eine vorbestimmte Anordnung einnehmen, wobei die vorbestimmte Anordnung für die eingezogenen Wicklungen jedes der Statoren identisch realisiert wird;
iv. Vorsehen eines Kontaktierungsbausatzes wie er im Vorhergehenden erläutert wurde;
v. Festlegen eines unterschiedlichen Wicklungsschemas für jede der unterschiedlichen Leistungsklassen, indem die entsprechenden Kontaktierungssätze in den jeweiligen Trägerkörper eingesetzt werden und mit der entsprechenden vorbestimmten Anordnung der Enden der Wicklungen des jeweiligen Stators verbunden werden.

Die bestimmte Anordnung der vorstehenden Enden ist, wie bereits erwähnt, dahingehend bestimmt, dass eine Reihenfolge der Enden und räumliche Positionen der Enden, insbesondere deren Abstände, definiert sind.

**In** Schritt iii. werden die Enden insbesondere durch Biegung und Torsion in die bestimmte Anordnung gebracht. Das Verfahren eignet sich für Spulen, die aus Stabwicklung realisiert sind und deren Enden eigensteif in der vorbestimmten Anordnung verharren. Wenn die Spulen aus Drahtwicklungen aufgebaut sind, deren Enden nicht eigensteif ortsfest bleiben, ist bevorzugt ein Adapterelement vorgesehen, dass die Enden in der Anordnung hält.

In Schritt v. erfolgt das Verbinden bevorzugt durch Herstellen eines Stoffschlusses, beispielsweise Laserschweißen. Alternative Verbindungsverfahren sind beispielsweise Wolfram-Inertgas-Schweißen, Elektronenstrahlschweißen oder Hartlöten.

Die Schritte i. bis v., insbesondere die Schritte iii. bis v., erfolgen bevorzugt automatisiert, ohne manuelle Eingriffe.

Durch den erfindungsgemäßen Kontaktierungsbausatz und das erfindungsgemäße Verfahren werden große Vorteile erzielt, zu denen Folgende zählen:
- Kosten können gesenkt werden aufgrund hoher Stückzahlen gleicher Elemente (Gleichteilekonzept);
- einmalige Investitionen in Fertigungsanlagen durch Nutzung gleicher Anlagen und Verfahrenstechniken, wie beispielsweise Biege- und Stanzanlagen zur Herstellung der Kontaktierungselemente.
- Das Herstellungsverfahren deckt weite Leistungsklassen aufgrund des einheitlichen Schnittstellendesigns des Stators ab.
- Der Kontaktierungsbausatz realisiert für elektrische Maschinen unterschiedlicher Leistungsklassen eine gleichbleibende Schnittstelle zwischen Stator und Wechselrichter und besitzt für die unterschiedlichen Maschinen eine gleichbleibende Außenform. Damit vermindert und vereinheitlicht sich der Prüfungsumfang und der Designvalidierungsaufwand in der Entwicklung.
- Die Kontaktierungselemente sind wenig komplexe Elemente.
- Der Rohstoffeinsatz für den Trägerkörper und die Kontaktierungselemente ist gering.

Im Folgenden wird eine bevorzugte Ausführungsform des erfindungsgemäßen Kontaktierungsbausatzes, der in dem erfindungsgemäßen Herstellungsverfahren zum Einsatz kommt, beschrieben.

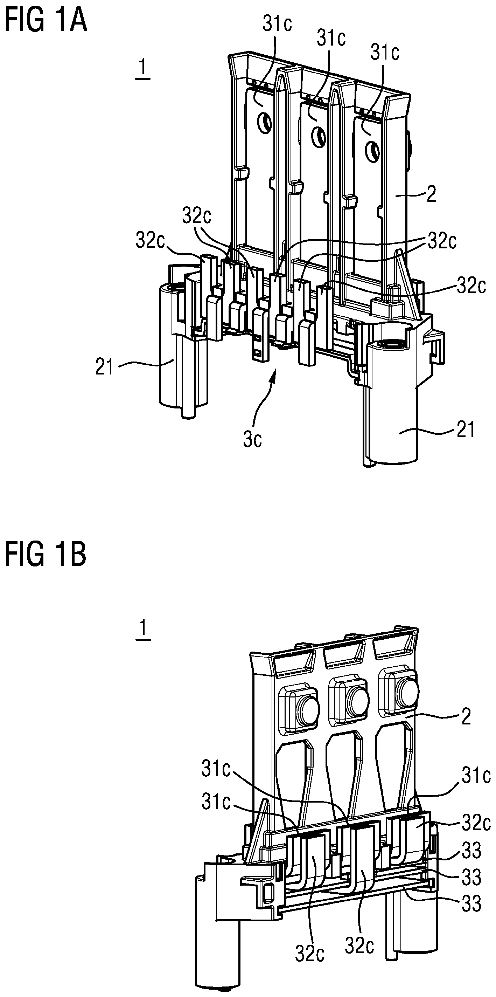

Figuren 1A und 1B zeigen jeweils perspektivische Ansichten eines erfindungsgemäßen Kontaktierungsbausatzes, in den Kontaktierungselemente eingesetzt sind, wobei die Kontaktierungselemente austauschbar sind;

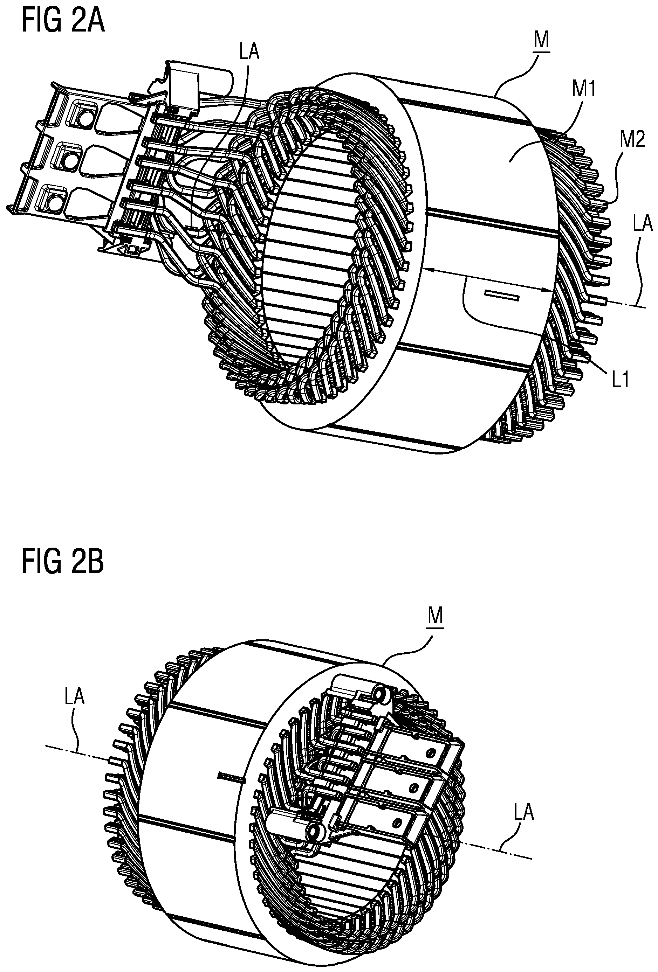

Figuren 2A und 2B zeigen perspektivische Ansichten einer elektrischen Maschine mit Stabwicklungen, an denen der Kontaktierungsbausatz gemäß Figuren 1A und 1B befestigt ist;

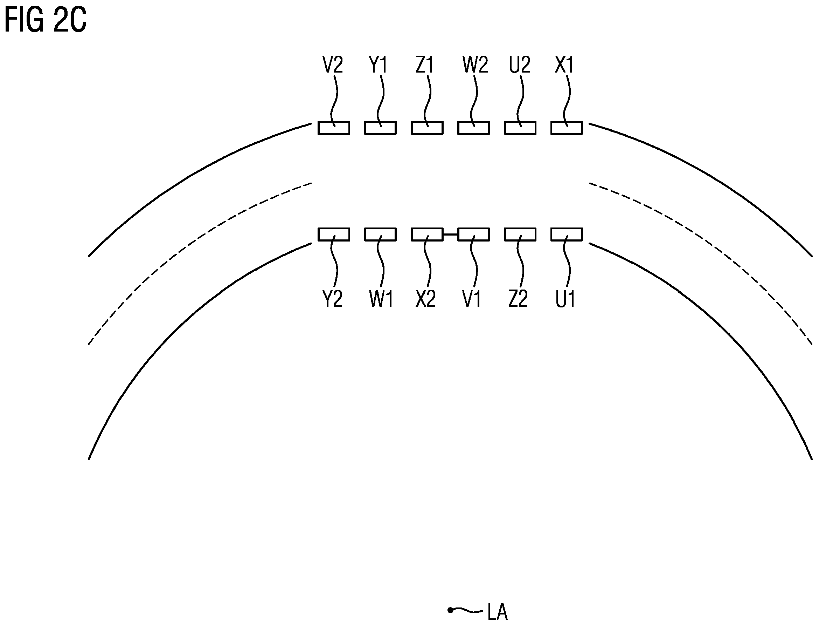

Figur 2C zeigt schematisch eine bestimmte Anordnung bzw. Reihenfolge der offenen Enden der Stabwicklungen, die in dem erfindungsgemäßen Herstellungsverfahren unabhängig von der Leistungsklasse realisiert wird und für die der erfindungsgemäße Kontaktierungsbausatz vorgesehen ist;

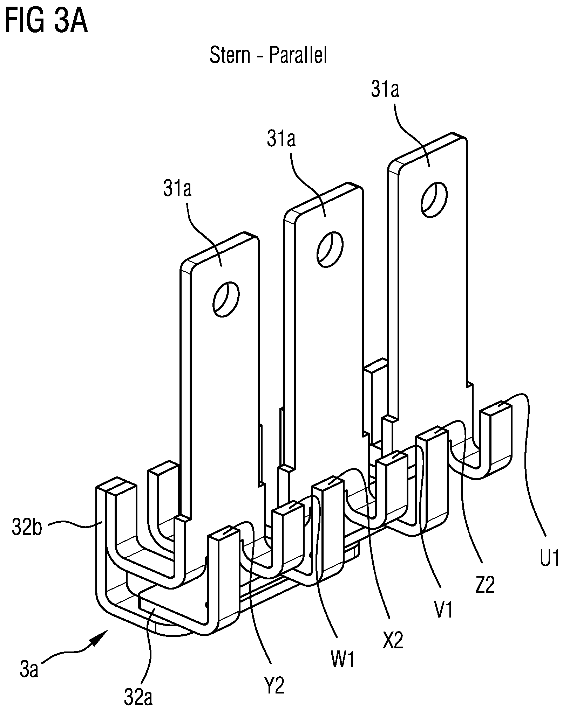

Figuren 3A bis 3D zeigen einen ersten Kontaktierungssatz mit einer Vielzahl von Kontaktierungselementen für die bestimmungsgemäße Kontaktierung zwischen einer Energieversorgungseinrichtung der elektrischen Maschine und der bestimmten Anordnung der vorstehenden Enden der Stabwicklungen aus Figur 2C, sowie ein entsprechendes Schaltbild, das eine Stern-Parallel-Konfiguration zeigt;

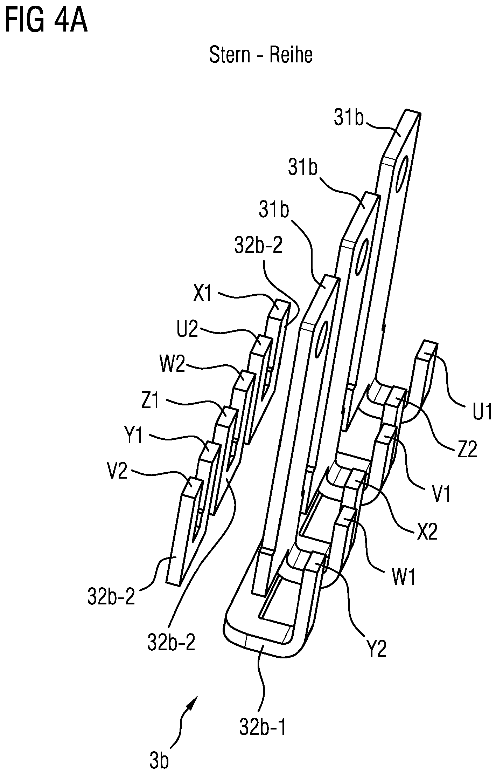

Figuren 4A bis 4C zeigen einen zweiten Kontaktierungssatz mit einer Vielzahl von Kontaktierungselementen für die bestimmungsgemäße Kontaktierung zwischen einer Energieversorgungseinrichtung der elektrischen Maschine und der bestimmten Anordnung der vorstehenden Enden der Stabwicklungen aus Figur 2C, sowie ein entsprechendes Schaltbild, das eine Stern-Reihe-Konfiguration zeigt,

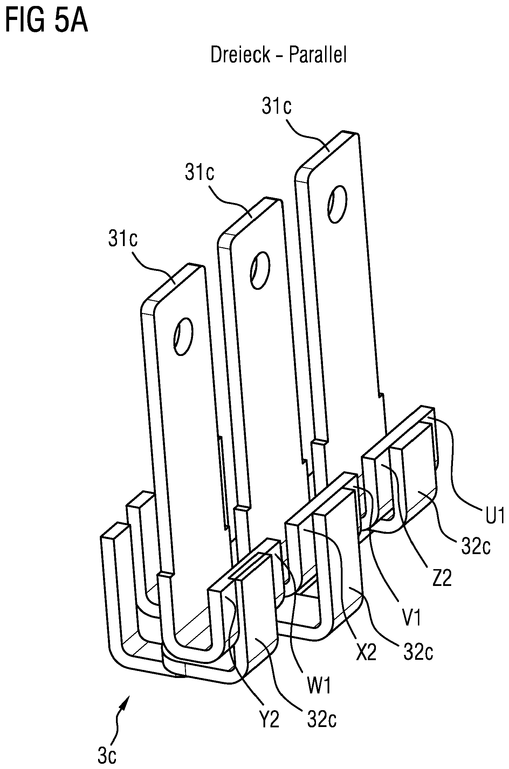

Figuren 5A bis 5E zeigen einen dritten Kontaktierungssatz mit einer Vielzahl von Kontaktierungselementen für die bestimmungsgemäße Kontaktierung zwischen einer Energieversorgungseinrichtung der elektrischen Maschine und der bestimmten Anordnung der vorstehenden Enden der Stabwicklungen aus Figur 2C, sowie ein entsprechendes Schaltbild, das eine Dreieck-Parallel-Konfiguration zeigt; und

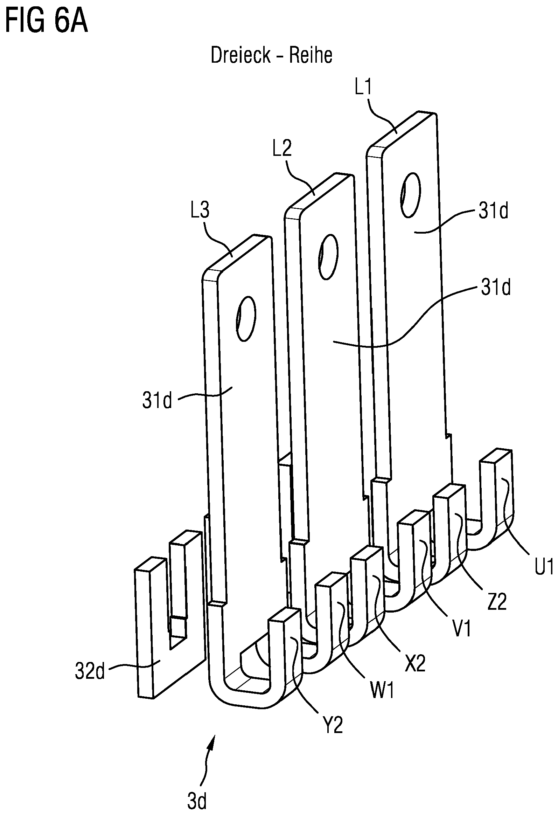

Figuren 6A bis 6C zeigen einen vierten Kontaktierungssatz mit einer Vielzahl von Kontaktierungselementen für die bestimmungsgemäße Kontaktierung zwischen einer Energieversorgungseinrichtung der elektrischen Maschine und der bestimmten Anordnung der vorstehenden Enden der Stabwicklungen aus Figur 2C, sowie ein entsprechendes Schaltbild, das eine Dreieck-Reihe-Konfiguration zeigt.

Figuren 1A und 1B zeigen einen erfindungsgemäßen Kontaktierungsbausatz 1 gemäß einer Ausführungsform der Erfindung.

Der Kontaktierungsbausatz 1 beinhaltet einen Trägerkörper 2 und einen Kontaktierungssatz mit einer Vielzahl von Kontaktierungselementen 3c, die in den Trägerkörper 2 eingesetzt sind und bestimmungsgemäß eine Kontaktierung zwischen einer nicht gezeigten Energieversorgungseinrichtung und einer im Folgenden noch erläuterten bestimmten Anordnung/räumlichen Reihenfolge vorstehender Enden von in einen Stator eingezogenen Spulen festlegen.

Der Trägerkörper 2 ist bevorzugt ein Spritzgussteil aus Kunststoff, das die Kontaktierungselemente 3c aufnimmt und haltert. Bevorzugt umfasst der Trägerkörper 2 zudem Befestigungsabschnitte 21, über die der Kontaktierungsbausatz 1 in einem (nicht gezeigten) Gehäuse einer elektrischen Maschine befestigt werden kann. Die Befestigung erfolgt beispielsweise durch Schraubverbindungen, wobei die entsprechenden Schrauben hierfür in Durchgänge, die in den Befestigungsabschnitten 21 gebildet sind, eingeführt und mit an dem Gehäuse gebildeten Gewinden verbunden werden.

Erfindungsgemäß beinhaltet der gezeigte Kontaktierungsbausatz 1 nicht nur den gezeigten Kontaktierungssatz, sondern mindestens einen weiteren Kontaktierungssatz, der ebenfalls eine Vielzahl an Kontaktierungselementen beinhaltet. Bevorzugt - aber hierauf nicht eingeschränkt - beinhaltet der Kontaktierungsbausatz 1 vier im Folgenden noch erläuterte Kontaktierungssätze mit jeweils einer Vielzahl von Kontaktierungselementen 3a, 3b, 3c, und 3d, wobei der in Figuren 1A und 1B gezeigte Kontaktierungssatz dem in Figuren 5A bis 5E gezeigten entspricht.

Der Trägerkörper 2 und die Kontaktierungssätze sind so ausgestaltet, dass jeder der Kontaktierungssätze in den Trägerkörper 2 wahlweise eingesetzt werden kann, ohne dass der Trägerkörper 2 einer Anpassung bedarf.

Die in Figuren 1A und 1B gezeigten Kontaktierungselemente 3c beinhalten Kontaktierungszungen 31c, die jeweils an die nicht gezeigte Energieversorgungseinrichtung angeschlossen werden, und Verbindungsbrückenelemente 32c.

Die Energieversorgungseinrichtung beinhaltet beispielsweise einen Hochvolt-Akkumulator (beispielsweise 400 V oder 800V) und einen Umrichter bzw. Wechselrichter, der aus dem von dem Energiespeicher gelieferten Gleichstrom Wechselstrom macht. Der Umrichter gibt für den Betrieb der im Folgenden noch erläuterten elektrischen Maschine insgesamt drei Phasen (L1, L2, L3) aus, wobei jede der drei Phasen mit einer der drei Kontaktierungszungen 31c bestimmungsgemäß kontaktiert wird.

Die Kontaktierung bzw. der Anschluss der Kontaktierungszungen 31c mit der jeweiligen Phase erfolgt beispielsweise durch eine Schraubverbindung zwischen entsprechenden Stromschienen und der jeweiligen Kontaktierungszunge 31c oder beispielsweise durch einen entsprechenden dreiphasigen Stecker, der mit dem in Figuren 1A und 1B gezeigten Trägerkörper 2 bestimmungsgemäß zusammengeführt wird.

Die Kontaktierungszungen 31c besitzen des weiteren gebogene Laschen, die, wie in Figur 1B ersichtlich ist, in einer bestimmten Reihenfolge auf einer Außenoberfläche des Trägerkörpers 2 freiliegen und bevorzugt um 180° gebogen sind.

Die Verbindungsbrückenelemente 32c werden bestimmungsgemäß ebenfalls in den Trägerkörper 2 eingesetzt. Die Verbindungsbrückenelemente 32c sind zum einen, wie in Figur 1B ersichtlich ist, mit den gebogenen Laschen der Kontaktierungszungen 31c verbunden bzw. mit diesen kontaktiert und verlaufen zum anderen durch den Trägerkörper 2 derart hindurch, dass sie auf der abgewandten Seite, die in Figur 1A gezeigt ist, an entsprechend definierten Positionen in einer bestimmten Reihenfolge freiliegen. Hierfür sind die in Figur 1A angezeigten Abschnitte der Verbindungsbrückenelemente 32c, bevorzugt um 90°, gebogen.

Ein Vergleich der Figuren 1A und 1B zeigt, dass die Laschen der Kontaktierungszungen 31c und die gebogenen Abschnitte der Verbindungsbrückenelemente 32c auf beiden Seiten des Trägerkörpers 2 an den definierten Positionen freiliegen, wobei sich diese Positionen in zwei parallel zueinander verlaufenden Ebenen befinden.

Die bereits erwähnte Stabwicklung der elektrischen Maschine wird bestimmungsgemäß an den definierten Positionen mit den Kontaktierungszungen 31c und den Verbindungsbrückenelemente 32c verbunden, worauf im Folgenden noch eingegangen werden wird.

Figuren 2A und 2B zeigen perspektivische Ansichten einer elektrischen Maschine M einer bestimmten Leistungsklasse, die einen Stator M1 und eine Vielzahl von in den Stator M1 eingezogene Spulen M2 beinhaltet.

Der Stator M1 ist ringförmig, insbesondere kreisringförmig, ausgebildet und definiert einen Innenraum, in den ein nicht gezeigter Rotor der elektrischen Maschine eingesetzt wird. Der Stator M1 und der entsprechend festgelegte Innenraum sind rotationssymmetrisch in Bezug auf eine entsprechende Längsachse, die in Figuren 2A und 2B gezeigt ist und einer Rotationsachse des nicht gezeigten Rotors entspricht. Auf einer dem Innenraum und der Längsachse LA zugewandten Seite des Stators M1 sind eine Vielzahl von Nuten ausgebildet, in die die Spulen M2 eingezogen sind. Der Stator M1 besitzt Abmessungen bzw. eine bestimmte Länge L1 in Richtung der Längsachse LA.

Die eingezogenen Spulen M2 sind als Stabwicklungen realisiert. Insgesamt sind in der Ausführungsform sechs Spulen M2 in den Stator M1 eingezogen, wobei die entsprechenden Enden der Spulen M2 auf einer der Seiten des Stators M1 vorstehen.

Wie aus den Figuren 2A und 2B ersichtlich ist, werden die vorstehenden Enden der Spulen M2 mit den Laschen der Kontaktierungszungen 31c und den gebogenen Abschnitten der Verbindungsbrückenelemente 32c an den definierten Positionen auf der Außenoberfläche des Trägerkörpers 2 kontaktiert und somit elektrisch verbunden.

Erfindungsgemäß lassen sich durch den Kontaktierungsbausatz 1 insbesondere elektrische Maschinen unterschiedlicher Leistungsklassen standardisiert herstellen und realisieren. Die elektrischen Maschinen unterschiedlicher Leistungsklassen unterscheiden sich insbesondere dadurch, dass zum einen die entsprechenden Statoren M1 unterschiedliche Abmessungen L1 in Richtung ihrer jeweiligen Längsachse und unterschiedliche Wicklungsschemata der entsprechenden Spulen besitzen. Um das entsprechende Herstellungsverfahren zu standardisieren, werden erfindungsgemäß folgende Schritte durchgeführt:
In einem ersten Schritt wird eine Vielzahl von Statoren bereitgestellt, wobei sie sich insbesondere in ihren Abmessungen bzw. Längen L1 unterscheiden.

Darauffolgend wird in jeden bereitgestellten Stator eine gleiche Anzahl von Spulen in die entsprechenden Nuten des jeweiligen Stators eingezogen. Bevorzugt befinden sich die Spulen in jedem Stator in jeweils identischen Nuten. D. h. die Systematik der Anordnung der Spulen in den jeweiligen Nuten, insbesondere in Bezug auf die jeweilige Spulenweite und Schichtung, ist bevorzugt für alle Statoren identisch.

Von wesentlicher Bedeutung ist, dass nach dem Einziehen der Spulen in die Statoren M1 unterschiedlicher Leistungsklassen sich die jeweiligen Enden der Spulen M2 an einer Stirnseite des jeweiligen Stators M1 befinden.

Diese Enden der eingezogenen Spulen M2 werden daraufhin derart gebogen und, bevorzugt tordiert, dass sie eine vorbestimmte Anordnung einnehmen. Die Anordnung wird für alle Statoren bzw. die entsprechend eingezogenen Spulen M2 gleichermaßen realisiert. Anders ausgedrückt ist die Anordnung der vorstehenden Enden der Spulen identisch unabhängig davon, welcher Leistungsklasse die final hergestellte elektrische Maschine zuzuordnen ist. Die vorbestimmte Anordnung der vorstehenden Enden ist insbesondere identisch in Bezug auf die Reihenfolge der Enden der Spulen M2 und in Bezug auf deren räumlichen Positionen.

Figur 2C zeigt schematisch eine bevorzugte vorbestimmte Anordnung der vorstehenden Enden der eingezogenen Spulen M2. In dem Verfahren werden bevorzugt sechs Spulen (UA,UB,VA,VB,WA,WB) in jeden der Statoren M1 eingezogen und die entsprechenden Enden derart gebogen, sodass die resultierenden offenen Enden die Anordnung aus Fig. 2C einnehmen. Die offenen Enden sind in Fig. 2C mit den Abkürzungen X1, X2, Y1, Y2, Z1, Z2, U1, U2, V1, V2, und W1, W2 bezeichnet. Die Figur 2C entspricht einer schematischen Ansicht der offenen Enden der Spulen in Richtung der Längsachse LA gesehen, d. h. die Längsachse LA steht senkrecht zur Zeichenebene der Figur 2C.

Die offenen Enden der Spulen wurden in dieser Ausführungsform derart in die vorbestimmte Anordnung gebogen, dass sie sich in zwei zueinander parallelen Ebenen befinden. Eine Reihenfolge der offenen Enden der Spulen M2 lautet in der radial zur Längsachse LA äußeren Ebene V2, Y1, Z1, W2, U2, X1, und in der radial zur Längsachse LA inneren Ebene Y2, W1, X2, V1, Z2, U1.

In einem weiteren Schritt des erfindungsgemäßen Herstellungsverfahren werden die Leistungsklassen der entsprechenden elektrischen Maschinen über deren Längsabmessungen L1 hinaus noch dadurch differenziert, dass die entsprechend eingezogenen Spulen zu jeweils unterschiedlichen Wicklungsschemata miteinander verschaltet werden. Für diesen Schritt kommt der erfindungsgemäße Kontaktierungsbausatz 1 zum Einsatz.

Wie bereits erläutert beinhaltet der Kontaktierungsbausatz 1 den Trägerkörper 2 und eine Vielzahl von unterschiedlichen Kontaktierungssätzen mit unterschiedlichen Kontaktierungselementen 3a, 3b, 3c, und 3d. Der Trägerkörper 2 und die jeweiligen Kontaktierungselemente 3a, 3b, 3c, und 3d sind so konfiguriert, dass die Kontaktierungselemente 3a, 3b, 3c, und 3d in den Trägerkörper 2 wahlweise eingesetzt werden können, sich die Positionen, an denen die jeweiligen Kontaktierungselemente auf der Außenoberfläche des Trägerkörpers 2 freiliegen, aber nicht ändern. Mit anderen Worten sind die Positionen, an denen die Kontaktierungselemente 3a, 3b, 3c, 3d freiliegen, unabhängig davon, welche der Kontaktierungselemente 3a, 3b, 3c, und 3d in den Trägerkörper eingesetzt sind.

Der Trägerkörper 2 und die Kontaktierungselemente 3a, 3b, 3c, und 3d sind so dimensioniert, dass die definierten Positionen, an denen die Kontaktierungselemente 3a, 3b, 3c, 3d freiliegen, mit der räumlichen Anordnung der vorstehenden Enden, wie sie in Figur 2C gezeigt ist, zusammenpassen.

Die Kontaktierungselemente 3a, 3b, 3c, 3d jedes der Kontaktierungssätze sind zudem so ausgebildet, dass jeder Kontaktierungssatz ein unterschiedliches Wicklungsschema realisiert. In dem erfindungsgemäßen Verfahren wird deshalb eine Entscheidung getroffen, in welcher Weise die Spulen M2 der gerade herzustellenden elektrischen Maschine zu verschalten sind, und einer der Kontaktierungssätze bzw. die entsprechenden Kontaktierungselemente 3a, 3b, 3c, 3d ausgewählt.

Nach Auswahl des entsprechenden Kontaktierungssatzes und Einsetzen der entsprechenden Kontaktierungselemente in den Trägerkörper 2, wird dieser zwischen die in Figur 2C gezeigten Ebenen eingeführt, wodurch die vorstehenden Enden der Spulen in Anlage mit den Kontaktierungselementen an den definierten Positionen kommen. Die vorstehenden Enden werden anschließend mit den Kontaktierungselementen stoffschlüssig verbunden, beispielsweise mittels Laserschweißen verschweißt.

Nachfolgend können noch weitere, für die Erfindung nicht wesentliche Schritte in dem Herstellungsverfahren durchgeführt werden, wie beispielsweise die Montage eines Gehäuses etc.

In der vorliegenden Ausführungsform werden in dem erfindungsgemäßen Herstellungsverfahren jeweils sechs Spulen in die Statoren unterschiedlicher Leistungsklassen eingezogen.

Im Folgenden werden vier beispielhafte Wicklungsschemata erläutert, die mit dem erfindungsgemäßen Kontaktierungsbausatz 1 realisierbar sind.

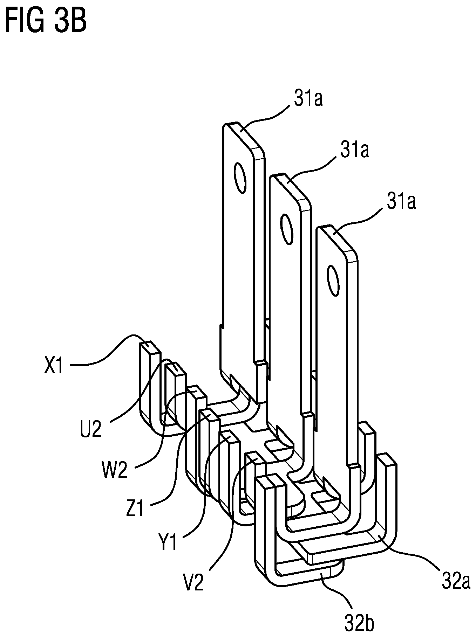

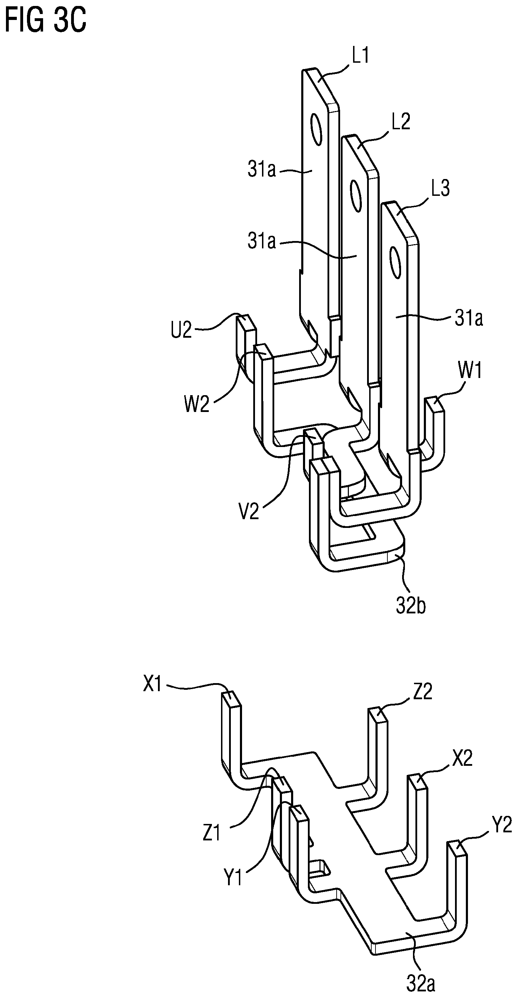

Figuren 3A bis 3C zeigen Kontaktierungselemente 3a eines ersten Kontaktierungssatzes, die in den Trägerkörper 2 eingesetzt werden können. Die Kontaktierungselemente 3a beinhalten drei Kontaktierungszungen 31a und ein sternpunktbildendes Brückenelement 32a sowie bevorzugt ein weiteres Verbindungsbrückenelement 32b. Figuren 3A und 3B zeigen die Kontaktierungselemente 3a in ihrer relativen Anordnung, so wie sie nach Einsetzen in den Trägerkörper 2 vorliegt. Figur 3C hingegen zeigt die Kontaktierungselemente 3a in einem auseinandergezogenen Zustand.

Der erste Kontaktierungssatz beinhaltet drei Kontaktierungszungen 31a für die drei Stromphasen L1, L2, L3, die von dem Umrichter ausgegeben werden. Jede der Kontaktierungszungen 31a beinhaltet zwei gebogene Laschen, die nach Einsetzen der entsprechenden Kontaktierungszunge 31a in den Trägerkörper 2 an jeweiligen der definierten Positionen freiliegen.

Das sternpunktbildende Brückenelement 32a beinhaltet insgesamt sechs gebogene Abschnitte, die nach Einsetzen des sternpunktbildenden Brückenelements 32a in den Trägerkörper 2 an jeweiligen der definierten Positionen freiliegen.

Die Figuren 3A bis 3C zeigen, an welchen der definierten Positionen die jeweiligen gebogenen Laschen der Kontaktierungszungen 31a und die gebogenen Abschnitte des sternpunktbildenden Brückenelementes 32a freiliegen und welchem der vorstehenden Enden der Spulen M2 sie entsprechen.

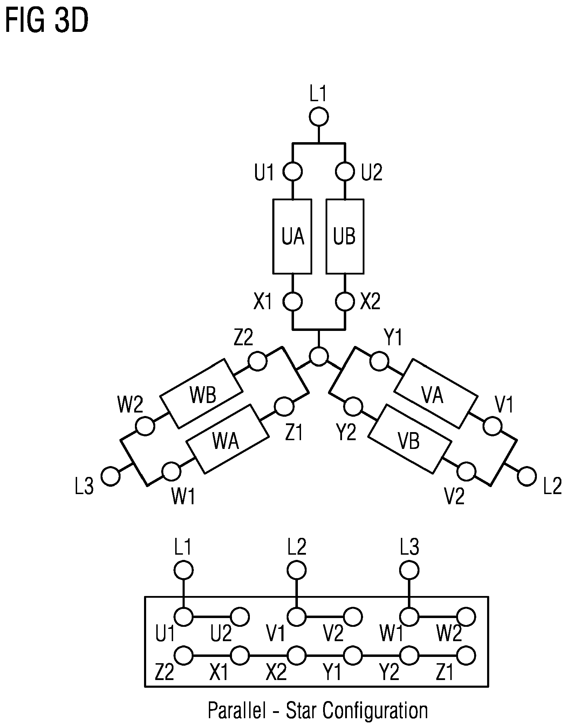

Hieraus ergibt sich, dass die Kontaktierungselemente 3a, nach Einsetzen in den Trägerkörper 2 und Kontaktieren mit der Anordnung der vorstehenden Enden der Spulen M2 gemäß Figur 2C, das in Figur 3D gezeigte erste Wicklungsschema realisieren. Erkennbar ist, dass es sich um eine Sternschaltung handelt, wobei das sternpunktbildende Brückenelement 32a einen entsprechenden Sternpunkt definiert, jede der drei Kontaktierungszungen 31a einem der drei Stränge zugeordnet ist und in jedem Strang zwei der sechs Spulen parallel geschaltet sind.

Das bevorzugt weitere Verbindungsbrückenelement 32b ist lediglich bevorzugt vorgesehen und dient dazu, die Komplexität der gebogenen Laschen der Kontaktierungszunge 31a, die der Stromphase L3 entspricht, zu reduzieren. Dies geschieht dadurch, dass das Verbindungsbrückenelement 32b zum einen an der Position des vorstehenden Endes W2 freiliegt und andererseits mit der gebogenen Lasche der genannten Kontaktierungszunge 31a kontaktiert ist. Die Kontaktierung erfolgt bevorzugt durch einen Formschluss. Anders ausgedrückt leitet das Verbindungsbrückenelement 32b die gebogenen Lasche lediglich um - wie es in Figur 3C besonders gut zu sehen ist - und verbindet keine zwei Enden der Spulen. Alternativ kann die gebogene Lasche der Kontaktierungszunge 31a so gebogen sein, dass auf das Verbindungsbrückenelement 32b verzichtet werden kann.

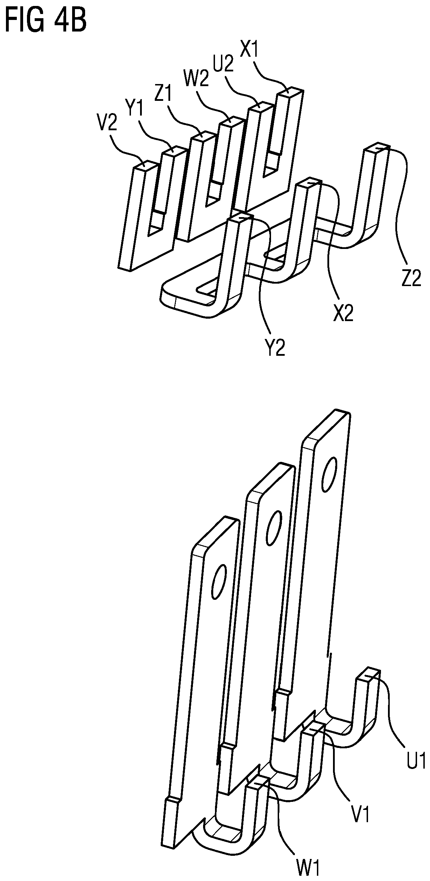

Figuren 4A und 4B zeigen Kontaktierungselemente 3b eines zweiten Kontaktierungssatzes, die in den Trägerkörper 2 eingesetzt werden können. Die Kontaktierungselemente 3b beinhalten drei Kontaktierungszungen 31b und eine Vielzahl von Brückenelementen 32b.

Figur 4A zeigt die Kontaktierungselemente 3b in ihrer relativen Anordnung, so wie sie nach Einsetzen in den Trägerkörper 2 vorliegt. Figur 4B hingegen zeigt die Kontaktierungselemente 3b in einem auseinandergezogenen Zustand.

Der zweite Kontaktierungssatz beinhaltet drei Kontaktierungszungen 31b für die drei Stromphasen L1, L2, L3, die von dem Umrichter ausgegeben werden. Jede der Kontaktierungszungen 31b beinhaltet eine gebogene Lasche, die nach Einsetzen der entsprechenden Kontaktierungszunge 31b in den Trägerkörper 2 an einer der definierten Positionen freiliegt.

Ein sternpunktbildendes Brückenelement 32b-1 der Brückenelemente 32b beinhaltet insgesamt drei gebogene Abschnitte, die nach Einsetzen des Brückenelements 32b-1 in den Trägerkörper 2 an jeweiligen der definierten Positionen freiliegen. Weitere Reihenbrückenelemente 32b-2 sind jeweils U-förmig ausgebildet und liegen jeweils an zwei der definierten Positionen frei.

Die Figuren 4A und 4B zeigen, an welchen der definierten Positionen die jeweiligen gebogenen Laschen der Kontaktierungszungen 31b und die Abschnitte der Brückenelemente 32b freiliegen und welchem der vorstehenden Enden der Spulen M2 sie entsprechen.

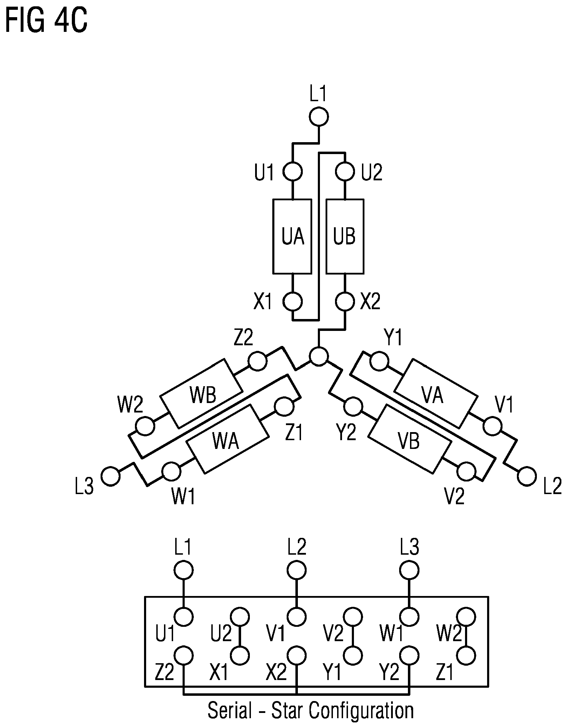

Hieraus ergibt sich, dass die Kontaktierungselemente 3b, nach Einsetzen in den Trägerkörper und Kontaktieren mit der Anordnung der vorstehenden Enden der Spulen M2 gemäß Figur 2C, das in Figur 4C gezeigte zweite Wicklungsschema realisieren. Erkennbar ist, dass es sich wiederum um eine Sternschaltung handelt, wobei das sternpunktbildende Brückenelement 32b-1 einen entsprechenden Sternpunkt definiert, jede der drei Kontaktierungszungen 31b einem der drei Stränge zugeordnet ist und in jedem Strang zwei der sechs Spulen in Reihe geschaltet sind. Die Verbindung in Reihe der entsprechenden Spulen übernehmen die weiteren Reihenbrückenelemente 32b-2.

Figuren 5A bis 5E zeigen Kontaktierungselemente 3c eines dritten Kontaktierungssatzes, die in den Trägerkörper 2 eingesetzt werden können. Die Kontaktierungselemente 3c beinhalten drei Kontaktierungszungen 31c und eine Vielzahl von Verbindungsbrückenelementen 32c.

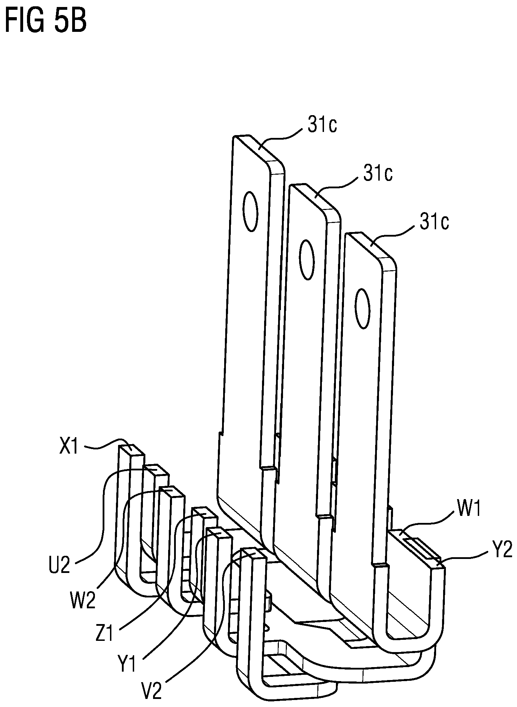

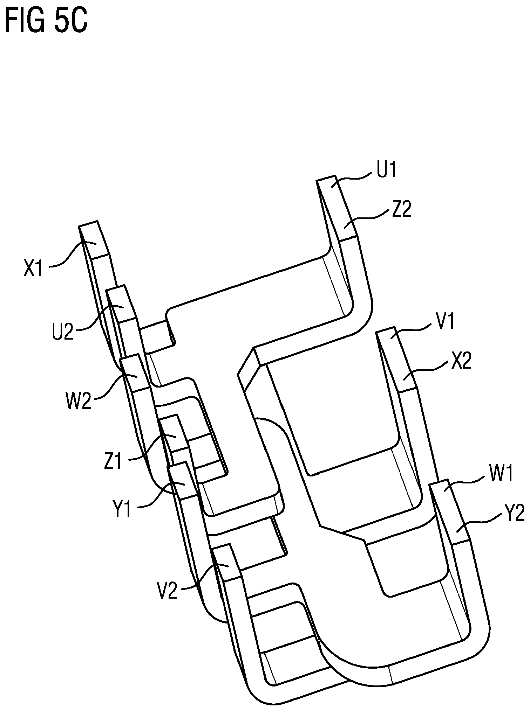

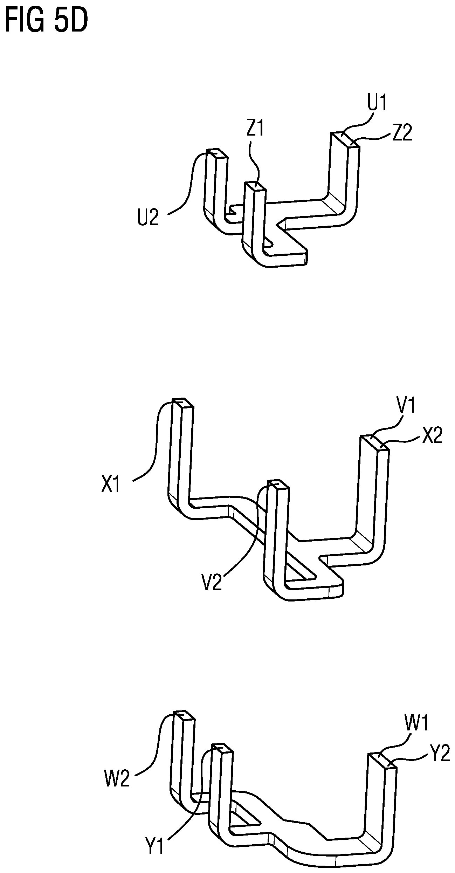

Figuren 5A und 5B zeigen die Kontaktierungselemente 3c in ihrer relativen Anordnung, so wie sie nach Einsetzen in den Trägerkörper 2 vorliegt. Figur 5C zeigt die relative Anordnung der Verbindungsbrückenelemente 32c nach Einsetzen in den Trägerkörper 2 und Figur 5D die jeweiligen Verbindungsbrückenelemente 32c in auseinandergezogener Darstellung.

Der dritte Kontaktierungssatz beinhaltet drei Kontaktierungszungen 31c für die drei Stromphasen L1, L2, L3, die von dem Umrichter ausgegeben werden. Jede der Kontaktierungszungen 31c beinhaltet eine gebogene Lasche, die nach Einsetzen der entsprechenden Kontaktierungszunge 31c in den Trägerkörper 2 an zwei der definierten Positionen freiliegt. Hierbei bildet eine Lasche gleichzeitig beide der definierten Positionen.

Jedes der Verbindungsbrückenelemente 32c beinhaltet insgesamt drei gebogene Abschnitte, von denen zwei nach Einsetzen des jeweiligen Verbindungsbrückenelements 32c in den Trägerkörper 2 an zwei der definierten Positionen freiliegen. Der verbleibende dritte, gebogene Abschnitt ist mit jeweils einer der Kontaktierungszungen 31c verbunden und zwar derart, dass er die gebogene Lasche der Kontaktierungszunge 31c in die entsprechenden zwei der definierten Positionen unterteilt.

Die Figuren 5A bis 5D zeigen, an welchen der definierten Positionen die jeweiligen gebogenen Laschen der Kontaktierungszungen 31c und die gebogenen Abschnitte der Verbindungsbrückenelemente 32c freiliegen und welchem der vorstehenden Enden der Spulen M1 sie entsprechen.

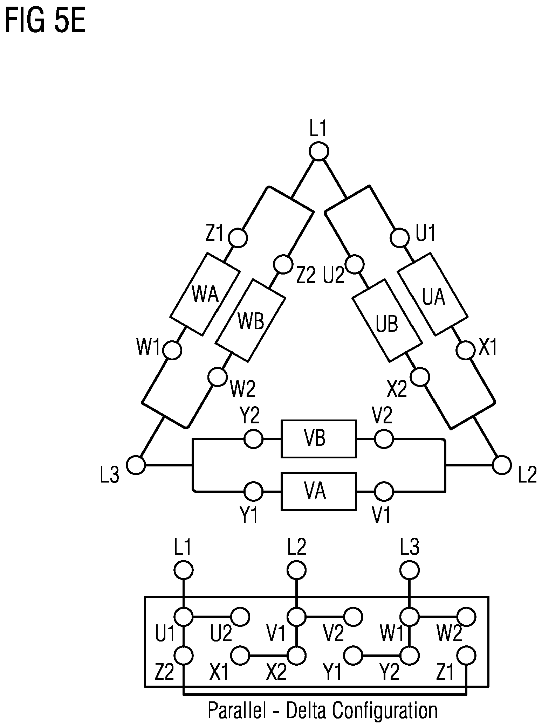

Hieraus ergibt sich, dass die Kontaktierungselemente 3c, nach Einsetzen in den Trägerkörper 2 und Kontaktieren mit der Anordnung der vorstehenden Enden der Spulen M2 gemäß Figur 2C, das in Figur 5E gezeigte dritte Wicklungsschema realisieren. Erkennbar ist, dass es sich um eine Dreieckschaltung handelt, wobei die gebogenen Laschen der Kontaktierungszungen 31c jeweils einen der drei Stränge zweifach kontaktieren, in jedem Strang zwei der sechs Spulen parallel geschaltet sind, und die Verbindungsbrückenelemente 32c die zweifache Verbindung mit einem anderen der Stränge realisieren.

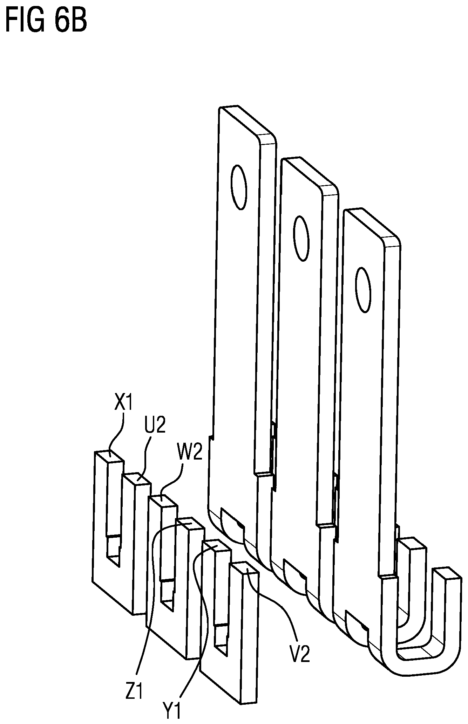

Figuren 6A und 6B zeigen Kontaktierungselemente 3d eines vierten Kontaktierungssatzes, die in den Trägerkörper 2 eingesetzt werden können. Die Kontaktierungselemente 3d beinhalten drei Kontaktierungszungen 31d und eine Vielzahl von U-förmigen Reihenbrückenelementen 32d.

Figuren 6A und 6B zeigen die Kontaktierungselemente 3d in ihrer relativen Anordnung, so wie sie nach Einsetzen in den Trägerkörper 2 vorliegt.

Der vierte Kontaktierungssatz beinhaltet drei Kontaktierungszungen 31d für die drei Stromphasen L1, L2, L3, die von dem Umrichter ausgegeben werden. Jede der Kontaktierungszungen 31d beinhaltet zwei gebogene Laschen, die nach Einsetzen der entsprechenden Kontaktierungszunge 31d in den Trägerkörper 2 an zwei der definierten Positionen freiliegen.

Jedes der Reihenbrückenelemente 32d ist jeweils U-förmig ausgebildet und liegt an zwei der definierten Positionen frei. Bevorzugt sind sie identisch zu den Reihenbrückenelementen 32b-2 aus Fig. 4A.

Die Figuren 6A und 6B zeigen, an welchen der definierten Positionen die jeweiligen gebogenen Laschen der Kontaktierungszungen 31d und die Abschnitte der Reihenbrückenelemente 32d freiliegen und welchem der vorstehenden Enden der Spulen M2 sie entsprechen.

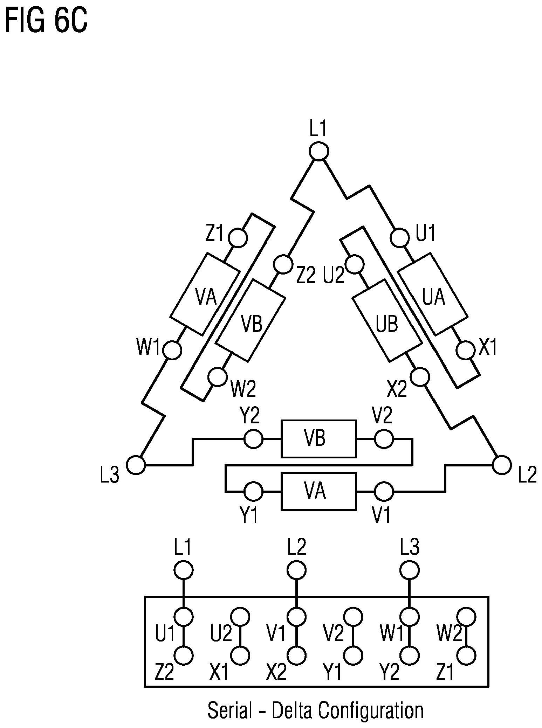

Hieraus ergibt sich, dass die Kontaktierungselemente 3d, nach Einsetzen in den Trägerkörper 2 und Kontaktieren mit der Anordnung der vorstehenden Enden der Spulen M2 gemäß Figur 2C, das in Figur 6C gezeigte vierte Wicklungsschema realisieren. Erkennbar ist, dass es sich um eine Dreieckschaltung handelt, wobei die gebogenen Laschen der Kontaktierungszungen 31d jeweils zwei der drei Stränge kontaktieren, in jedem Strang zwei der sechs Spulen in Reihe geschaltet sind, und die Reihenbrückenelemente 32d die Verbindung in Reihe der Spulen in jedem Strang realisieren.

Aus den vorhergehenden Darstellungen der einzelnen Kontaktierungselemente 3a, 3b, 3c, 3d der vier Kontaktierungssätze ist ersichtlich, dass sich durch die Kontaktierungselemente realisierte Verbindungen der vorstehenden Enden der Spulen M2 streckenweise kreuzen. Aus diesem Grund sind der Trägerkörper 2 und die Kontaktierungselemente bevorzugt so ausgebildet, dass sich die Kontaktierungselemente in verschiedenen Ebenen kreuzen können.

Figuren 1A und 1B zeigen den Kontaktierungsbausatz 1 in seinem zusammengesetzten Zustand, wobei der dritte Kontaktierungssatz und die entsprechenden Kontaktierungselemente 3c eingesetzt sind. Insbesondere aus Figur 1B in Kombination mit Figuren 5A bis 5D ist ersichtlich, dass die einzelnen Kontaktierungselemente in verschiedenen Ebenen verlaufen, um kreuzende Verbindungen zu realisieren, wobei bevorzugt plattenförmige Isolationselemente zwischen die Kontaktierungselemente unterschiedlicher Ebenen eingefügt sind.

Die Kontaktierungselemente aller Kontaktierungssätze des erfindungsgemäßen Kontaktierungsbausatzes sind, wie aus der vorhergehenden Beschreibung ersichtlich, Elemente, die auf Basis gleicher Fertigungstechnologie hergestellt werden können. Alle Elemente sind einstückige, monolithische Biege- und/oder Stanzteile, die aus Metallplatten geformt sind.

Die Ausführungen vor der Figurenbeschreibung gelten für die Ausführungsformen des erfindungsgemäßen Herstellungsverfahrens und den erfindungsgemäßen Kontaktierungsbausatz gleichermaßen.

## Patentansprüche

1. Kontaktierungsbausatz (1) zur Realisierung einer Kontaktierung zwischen einer Energieversorgungseinrichtung und Spulen einer elektrischen Maschine für ein Kraftfahrzeug, aufweisend:
einen ersten Kontaktierungssatz mit einer Vielzahl von Kontaktierungselementen (3a, 3b, 3c, 3d), die bestimmungsgemäß eine Kontaktierung zwischen der Energieversorgungseinrichtung und einer bestimmten Anordnung vorstehender Enden der in einen Stator (M1) eingezogenen Spulen festlegen;
einen zweiten Kontaktierungssatz mit einer Vielzahl von Kontaktierungselementen (3a, 3b, 3c, 3d), die bestimmungsgemäß eine Kontaktierung zwischen der Energieversorgungseinrichtung und der bestimmten Anordnung vorstehender Enden festlegen; und
einen Trägerkörper (2), in den die Kontaktierungselemente (3a, 3b, 3c, 3d) des ersten und zweiten Kontaktierungssatzes einsetzbar sind; wobei
die Kontaktierungselemente (3a, 3b, 3c, 3d) des ersten und zweiten Kontaktierungssatzes derart ausgebildet sind, dass sie, unabhängig davon, welcher des ersten oder zweiten Kontaktierungssatzes in den Trägerkörper (2) eingesetzt ist, an definierten Positionen auf einer Außenoberfläche des Trägerkörpers (2) zur Kontaktierung mit den vorstehenden Enden freiliegen, sodass für die bestimmte Anordnung vorstehender Enden der Spulen durch das wahlweise Einsetzen der Kontaktierungselemente (3a, 3b, 3c, 3d) des ersten oder zweiten Kontaktierungssatzes in den Trägerkörper (2) ein erstes oder ein zweites Wicklungsschema der Spulen realisierbar ist, wobei
weiterhin aufweisend:
einen dritten Kontaktierungssatz mit einer Vielzahl von Kontaktierungselementen (3a, 3b, 3c, 3d), die bestimmungsgemäß eine Kontaktierung zwischen der Energieversorgungseinrichtung und der bestimmten Anordnung vorstehender Enden der in den Stator (M1) eingezogenen Spulen festlegen; und
einen vierten Kontaktierungssatz mit einer Vielzahl von Kontaktierungselementen (3a, 3b, 3c, 3d), die bestimmungsgemäß eine Kontaktierung zwischen der Energieversorgungseinrichtung und der bestimmten Anordnung vorstehender Enden festlegen; wobei
die Kontaktierungselemente (3a, 3b, 3c, 3d) des dritten und vierten Kontaktierungssatzes derart ausgebildet sind, dass sie, unabhängig davon, welcher des dritten oder vierten Kontaktierungssatzes in den Trägerkörper eingesetzt ist, an den definierten Positionen auf der Außenoberfläche des Trägerkörpers (2) zur Kontaktierung mit den vorstehenden Enden freiliegen, sodass für die bestimmte Anordnung vorstehender Enden der Spulen durch das wahlweise Einsetzen der Kontaktierungselemente des dritten oder vierten Kontaktierungssatzes in den Trägerkörper (2) ein drittes oder viertes Wicklungsschema der Spulen realisierbar ist.

2. Kontaktierungsbausatz (1) nach Patentanspruch 1, wobei
die Kontaktierungselemente (3a) des ersten Kontaktierungssatzes m Kontaktierungszungen (31a) zur Verbindung mit der Energieversorgungseinrichtung einerseits und mit m Strängen des ersten aus den Spulen gebildeten Wicklungsschemas andererseits, und mindestens ein einen Sternpunkt einer Sternschaltung bildendes Brückenelement (32a) beinhalten; wobei
das erste Wicklungsschema n>1 parallele Spulen in jedem der m Stränge beinhaltet, und für die entsprechende Realisierung die Kontaktierungselemente (3a) des ersten Kontaktierungssatzes sowie der Trägerkörper (2) derart konfiguriert sind, dass nach Einsetzen der Kontaktierungselemente (3a) in den Trägerkörper (2):
- jede der m Kontaktierungszungen (31a) an n der definierten Positionen auf der Außenoberfläche des Trägerkörpers (2) zur Kontaktierung mit den vorstehenden Enden freiliegt, und
- das sternpunktbildende Brückenelement an n*m der definierten Positionen auf der Außenoberfläche des Trägerkörpers (2) zur Kontaktierung mit den vorstehenden Enden freiliegt.

3. Kontaktierungsbausatz (1) nach Patentanspruch 1 oder 2, wobei
die Kontaktierungselemente (3b) des zweiten Kontaktierungssatzes m Kontaktierungszungen (31b) zur Verbindung mit der Energieversorgungseinrichtung einerseits und mit m Strängen des zweiten aus den Spulen gebildeten Wicklungsschemas andererseits, und ein einen Sternpunkt einer Sternschaltung bildendes Brückenelement (31b-1) und eine Vielzahl von Reihenbrückenelementen (31b-2) beinhalten; wobei
das zweite Wicklungsschema n>1 in Reihe geschaltete Spulen in jedem der m Stränge beinhaltet, und für die entsprechende Realisierung die Kontaktierungselemente (31b) des zweiten Kontaktierungssatzes sowie der Trägerkörper (2) derart konfiguriert sind, dass nach Einsetzen der Kontaktierungselemente (3b) in den Trägerkörper (2):
- jede der m Kontaktierungszungen (31b) an einer der definierten Positionen auf der Außenoberfläche des Trägerkörpers (2) zur Kontaktierung mit den vorstehenden Enden freiliegt,
- das sternpunktbildende Brückenelement (32b-1) an m definierten Positionen auf der Außenoberfläche des Trägerkörpers zur Kontaktierung mit den vorstehenden Enden freiliegt, und
- jedes der Reihenbrückenelemente (32b-2) an zwei definierten Positionen auf der Außenoberfläche des Trägerkörpers zur Kontaktierung mit den vorstehenden Enden freiliegt.

4. Kontaktierungsbausatz (1) nach einem der vorstehenden Patentansprüche, wobei
die Kontaktierungselemente des dritten Kontaktierungssatzes m Kontaktierungszungen (31c) zur Verbindung mit der Energieversorgungseinrichtung einerseits und mit m Strängen des dritten aus den Spulen gebildeten Wicklungsschemas andererseits, und m Verbindungsbrückenelemente (32c) beinhalten;
das dritte Wicklungsschema eine Dreieckschaltung ist und n>1 parallel geschaltete Spulen in jedem der m Stränge beinhaltet, und
für die entsprechende Realisierung des dritten Wicklungsschemas die Kontaktierungselemente des dritten Kontaktierungssatzes sowie der Trägerkörper (2) derart konfiguriert sind, dass nach Einsetzen der Kontaktierungselemente in den Trägerkörper (2):
- jede der m Kontaktierungszungen (31c) an n der definierten Positionen auf der Außenoberfläche des Trägerkörpers (2) zur Kontaktierung mit den vorstehenden Enden freiliegt, und
- jedes der m Verbindungsbrückenelemente (32c) mit einer der m Kontaktierungszungen kontaktiert ist und an n der definierten Positionen auf der Außenoberfläche des Trägerkörpers (2) zur Kontaktierung mit den vorstehenden Enden freiliegt.

5. Kontaktierungsbausatz (1) nach einem der vorstehenden Patentansprüche, wobei
die Kontaktierungselemente des vierten Kontaktierungssatzes m Kontaktierungszungen (31d) zur Verbindung mit der Energieversorgungseinrichtung einerseits und mit m Strängen andererseits, und eine Vielzahl von Reihenbrückenelemente (32d) beinhalten;
das vierte Wicklungsschema eine Dreieckschaltung ist und n>1 in Reihe geschaltete Spulen in jedem der m Stränge beinhaltet; und
für die entsprechende Realisierung des vierten Wicklungsschemas die Kontaktierungselemente (3d) des vierten Kontaktierungssatzes sowie der Trägerkörper (2) derart konfiguriert sind, dass nach Einsetzen der Kontaktierungselemente (3d) in den Trägerkörper (2):
- jede der m Kontaktierungszungen (31d) an zwei der definierten Positionen auf der Außenoberfläche des Trägerkörpers (2) zur Kontaktierung mit den vorstehenden Enden freiliegt, und
- jedes der Reihenbrückenelemente (32d) an zwei der definierten Positionen auf der Außenoberfläche des Trägerkörpers (2) zur Kontaktierung mit den vorstehenden Enden freiliegt.

6. Kontaktierungsbausatz (1) nach einem der vorstehenden Patentansprüche, wobei
der Trägerkörper (2) m Öffnungen für die m Kontaktierungszungen (31a, 31b, 31c, 31d) beinhaltet, in die die Kontaktierungszungen (31a, 31b, 31c, 31d) in einer vorbestimmten Richtung eingeführt werden, wobei die Kontaktierungszungen (31a, 31b, 31c, 31d) gebogene Abschnitte aufweisen, die nach dem Einführen der Kontaktierungszungen (31a, 31b, 31c, 31d) auf der Außenoberfläche an den entsprechenden definierten Positionen freiliegen, und die Brückenelemente (32a, 32b, 32c, 32d) nach dem Einführen der Kontaktierungszungen (31a, 31b, 31c, 31d) in die Öffnungen in den Trägerkörper derart eingesetzt werden, dass sie in einer zu den Kontaktierungszungen versetzten Ebene verlaufen, die Kontaktierungszungen (31a, 31b, 31c, 31d) kreuzen und an entsprechenden der definierten Positionen freiliegen.

7. Verfahren zur Herstellung von elektrischen Maschinen unterschiedlicher Leistungsklassen, welches folgende Schritte aufweist:
i. Bereitstellen einer Vielzahl von Statoren (M1), die jeweils einer der unterschiedlichen Leistungsklasse zuzuordnen sind, insbesondere dadurch, dass sie unterschiedliche Statorlängen entlang ihrer jeweiligen Längsachse besitzen;
ii. Einziehen in jeden der Statoren (M1) eine gleiche Anzahl von Spulen, derart, dass Enden jeder der Spulen an einer Stirnseite des jeweiligen Stators (M1) vorliegen;
iii. Führen der an der Stirnseite des jeweiligen Stators (M1) vorliegenden Enden derart, dass die Enden eine vorbestimmte Anordnung einnehmen, wobei die vorbestimmte Anordnung für die eingezogenen Wicklungen jedes der Statoren (M1) identisch realisiert wird;
iv. Vorsehen eines Kontaktierungsbausatzes (1) gemäß einem der Patentansprüche 1 bis 6;
v. Festlegen eines unterschiedlichen Wicklungsschemas für jede der unterschiedlichen Leistungsklassen, indem die entsprechenden Kontaktierungssätze in den jeweiligen Trägerkörper (2) eingesetzt werden und mit der entsprechenden vorbestimmten Anordnung der Enden der Wicklungen des jeweiligen Stators (M1) verbunden werden.

8. Verfahren gemäß Patentanspruch 7, wobei
in Schritt ii. Stabwicklungen in die Statoren (M1) eingezogen werden, und
in Schritt iii. die vorbestimmte Anordnung realisiert wird, indem die Enden der Stabwicklungen gebogen werden und durch Eigenstabilität der Stabwicklungen in der vorbestimmten Anordnung ortsfest bleiben.

9. Verfahren nach Patentanspruch 8, wobei
in Schritt iii. die Enden derart gebogen und tordiert werden, dass die Enden gemäß der vorbestimmten Anordnung in zwei zueinander parallelen Ebenen angeordnet sind.

## Claims

1. Contacting kit (1) for implementing contact between an energy supply device and coils of an electric machine for a motor vehicle, the contacting kit comprising:
a first contacting set having a multiplicity of contacting elements (3a, 3b, 3c, 3d) that are intended to establish contact between the energy supply device and a specific arrangement of protruding ends of the coils, which have been drawn into a stator (M1);
a second contacting set having a multiplicity of contacting elements (3a, 3b, 3c, 3d) that are intended to establish contact between the energy supply device and the specific arrangement of protruding ends; and
a support body (2) into which the contacting elements (3a, 3b, 3c, 3d) of the first and the second contacting set are insertable; wherein
the contacting elements (3a, 3b, 3c, 3d) of the first and the second contacting set are designed such that, irrespective of which of the first or the second contacting set is inserted into the support body (2), said contacting elements are exposed at defined positions on an outer surface of the support body (2) for the purposes of contacting the protruding ends, such that, for the specific arrangement of protruding ends of the coils, a first or a second winding pattern of the coils can be implemented by the selective insertion of the contacting elements (3a, 3b, 3c, 3d) of the first or the second contacting set into the support body (2), wherein
furthermore comprising:
a third contacting set having a multiplicity of contacting elements (3a, 3b, 3c, 3d) that are intended to establish contact between the energy supply device and the specific arrangement of protruding ends of the coils, which have been drawn into the stator (M1); and
a fourth contacting set having a multiplicity of contacting elements (3a, 3b, 3c, 3d) that are intended to establish contact between the energy supply device and the specific arrangement of protruding ends; wherein
the contacting elements (3a, 3b, 3c, 3d) of the third and the fourth contacting set are designed such that, irrespective of which of the third or the fourth contacting set is inserted into the support body, said contacting elements are exposed at the defined positions on the outer surface of the support body (2) for the purposes of contacting the protruding ends, such that, for the specific arrangement of protruding ends of the coils, a third or a fourth winding pattern of the coils can be implemented by the selective insertion of the contacting elements of the third or the fourth contacting set into the support body (2).

2. Contacting kit (1) according to Patent Claim 1, wherein
the contacting elements (3a) of the first contacting set comprise m contacting tongues (31a) for connection both to the energy supply device and to m phase windings of the first winding pattern formed from the coils, and comprise at least one bridge element (32a) that forms a star point of a star connection; wherein
the first winding pattern comprises n>1 parallel coils in each of the m phase windings, and, for the corresponding implementation, the contacting elements (3a) of the first contacting set and the support body (2) are configured such that, after the contacting elements (3a) have been inserted into the support body (2):
- each of the m contacting tongues (31a) is exposed at n of the defined positions on the outer surface of the support body (2) for the purposes of contacting the protruding ends, and
- the star-point-forming bridge element is exposed at n*m of the defined positions on the outer surface of the support body (2) for the purposes of contacting the protruding ends.

3. Contacting kit (1) according to Patent Claim 1 or 2, wherein
the contacting elements (3b) of the second contacting set comprise m contacting tongues (31b) for connection both to the energy supply device and to m phase windings of the second winding pattern formed from the coils, and comprise a bridge element (31b-1), which forms a star point of a star connection, and a multiplicity of serial bridge elements (31b-2); wherein
the second winding pattern comprises n>1 serially connected coils in each of the m phase windings, and, for the corresponding implementation, the contacting elements (31b) of the second contacting set and the support body (2) are configured such that, after the contacting elements (3b) have been inserted into the support body (2):
- each of the m contacting tongues (31b) is exposed at one of the defined positions on the outer surface of the support body (2) for the purposes of contacting the protruding ends,
- the star-point-forming bridge element (32b-1) is exposed at m defined positions on the outer surface of the support body for the purposes of contacting the protruding ends, and
- each of the serial bridge elements (32b-2) is exposed at two defined positions on the outer surface of the support body for the purposes of contacting the protruding ends.

4. Contacting kit (1) according to any one of the preceding patent claims, wherein
the contacting elements of the third contacting set comprise m contacting tongues (31c) for connection both to the energy supply device and to m phase windings of the third winding pattern formed from the coils, and comprise m connecting bridge elements (32c);
the third winding pattern is a delta connection and comprises n>1 parallel-connected coils in each of the m phase windings, and,
for the corresponding implementation of the third winding pattern, the contacting elements of the third contacting set and the support body (2) are configured such that, after the contacting elements have been inserted into the support body (2):
- each of the m contacting tongues (31c) is exposed at n of the defined positions on the outer surface of the support body (2) for the purposes of contacting the protruding ends, and
- each of the m connecting bridge elements (32c) is contacted with one of the m contacting tongues and is exposed at n of the defined positions on the outer surface of the support body (2) for the purposes of contacting the protruding ends.

5. Contacting kit (1) according to any one of the preceding patent claims, wherein
the contacting elements of the fourth contacting set comprise m contacting tongues (31d) for connection both to the energy supply device and to m phase windings, and comprise a multiplicity of serial bridge elements (32d); the fourth winding pattern is a delta connection and comprises n>1 serially connected coils in each of the m phase windings; and,
for the corresponding implementation of the fourth winding pattern, the contacting elements (3d) of the fourth contacting set and the support body (2) are configured such that, after the contacting elements (3d) have been inserted into the support body (2):
- each of the m contacting tongues (31d) is exposed at two of the defined positions on the outer surface of the support body (2) for the purposes of contacting the protruding ends, and
- each of the serial bridge elements (32d) is exposed at two of the defined positions on the outer surface of the support body (2) for the purposes of contacting the protruding ends.

6. Contacting kit (1) according to any one of the preceding patent claims, wherein
the support body (2) comprises m openings for the m contacting tongues (31a, 31b, 31c, 31d), into which openings the contacting tongues (31a, 31b, 31c, 31d) are inserted in a predetermined direction, wherein the contacting tongues (31a, 31b, 31c, 31d) have bent portions which, after the contacting tongues (31a, 31b, 31c, 31d) have been inserted, are exposed at the corresponding defined positions on the outer surface, and, after the contacting tongues (31a, 31b, 31c, 31d) have been inserted, the bridge elements (32a, 32b, 32c, 32d) are inserted into the openings in the support body such that said bridge elements run in a plane that is offset with respect to the contacting tongues, cross the contacting tongues (31a, 31b, 31c, 31d), and are exposed at corresponding positions from among the defined positions.

7. Method for producing electric machines in different power classes, which method has the following steps:
i. providing a multiplicity of stators (M1) which are assigned to in each case one of the different power classes, in particular by virtue of the fact that said stators have different stator lengths along their respective longitudinal axes;
ii. drawing an equal number of coils into each of the stators (M1) such that ends of each of the coils are present at one end side of each stator (M1);
iii. guiding the ends, which are present at the end side of each stator (M1), such that the ends assume a predetermined arrangement, wherein the predetermined arrangement is implemented identically for the drawn-in windings of each of the stators (M1);
iv. providing a contacting kit (1) according to any one of Patent Claims 1 to 6;
v. establishing a different winding pattern for each of the different power classes by virtue of the corresponding contacting sets being inserted into the particular support body (2) and being connected to the corresponding predetermined arrangement of the ends of the windings of the particular stator (M1).

8. Method according to Patent Claim 7, wherein,
in step ii., bar windings are drawn into the stators (M1), and,
in step iii., the predetermined arrangement is implemented by virtue of the ends of the bar windings being bent and remaining stationary in the predetermined arrangement owing to inherent stability of the bar windings.

9. Method according to Patent Claim 8, wherein,
in step iii., the ends are bent and twisted such that the ends are arranged, in accordance with the predetermined arrangement, in two mutually parallel planes.

## Revendications

1. Kit de mise en contact (1) pour la réalisation d'une mise en contact entre un dispositif d'alimentation en énergie et des bobines d'une machine électrique pour un véhicule à moteur, comportant :
un premier jeu de mise en contact avec une pluralité d'éléments de mise en contact (3a, 3b, 3c, 3d), qui établissent, comme prévu, une mise en contact entre le dispositif d'alimentation en énergie et un ensemble défini d'extrémités faisant saillie des bobines rentrées dans un stator (M1) ;
un deuxième jeu de mise en contact avec une pluralité d'éléments de mise en contact (3a, 3b, 3c, 3d), qui, comme prévu, établissent une mise en contact entre le dispositif d'alimentation en énergie et l'ensemble défini d'extrémités faisant saillie ; et
un corps de support (2), dans lequel les éléments de mise en contact (3a, 3b, 3c, 3d) du premier et du deuxième jeu de mise en contact peuvent être insérés ;
les éléments de mise en contact (3a, 3b, 3c, 3d) du premier et du deuxième jeu de mise en contact étant formés de telle manière qu'ils sont exposés sur des positions définies sur une surface extérieure du corps de support (2) pour venir en contact avec les extrémités faisant saillie, quel que soit le premier ou le deuxième jeu de mise en contact inséré dans le corps de support (2), si bien qu'un premier ou un deuxième schéma d'enroulement des bobines peut être réalisé pour l'ensemble défini d'extrémités faisant saillie des bobines en insérant au choix les éléments de mise en contact (3a, 3b, 3c, 3d) du premier ou du deuxième jeu de mise en contact dans le corps de support (2),
comportant par ailleurs :
un troisième jeu de mise en contact avec une pluralité d'éléments de mise en contact (3a, 3b, 3c, 3d) qui, comme prévu, établissent une mise en contact entre le dispositif d'alimentation en énergie et l'ensemble défini d'extrémités faisant saillie des bobines rentrées dans le stator (M1) ; et
un quatrième jeu de mise en contact avec une pluralité d'éléments de mise en contact (3a, 3b, 3c, 3d), qui, comme prévu, établissent une mise en contact entre le dispositif d'alimentation en énergie et l'ensemble défini d'extrémités faisant saillie ;
les éléments de mise en contact (3a, 3b, 3c, 3d) du troisième et du quatrième jeu de mise contact étant formés de telle manière qu'ils sont exposés sur les positions définies sur la surface extérieure du corps de support (2) pour venir en contact avec les extrémités faisant saillie, quel que soit le troisième ou le quatrième jeu de mise en contact inséré dans le corps de support si bien qu'un troisième ou quatrième schéma d'enroulement des bobines peut être réalisé pour l'ensemble défini d'extrémités faisant saillie des bobines en insérant au choix les éléments de mise en contact du troisième ou du quatrième jeu de mise en contact dans le corps de support (2).

2. Kit de mise en contact (1) selon la revendication 1,
les éléments de mise en contact (3a) du premier jeu de mise en contact renfermant m languettes de mise en contact (31a) pour le raccordement au dispositif d'alimentation en énergie d'une part et à m brins du premier schéma d'enroulement formé à partir des bobines d'autre part, et au moins un élément de pont (32a) formant un point en étoile d'un circuit en étoile ;
le premier schéma d'enroulement renfermant n>1 bobines parallèles dans chacun des m brins, et pour la réalisation correspondante, les éléments de mise en contact (3a) du premier jeu de mise en contact et le corps de support (2) étant configurés de telle manière qu'après insertion des éléments de mise en contact (3a) dans le corps de support (2) :
- chacune des m languettes de mise en contact (31a) est exposée sur n des positions définies sur la surface extérieure du corps de support (2) pour venir en contact avec les extrémités faisant saillie, et
- l'élément de pont formant le point en étoile est exposé sur n*m des positions définies sur la surface extérieure du corps de support (2) pour la mise en contact avec les extrémités faisant saillie.

3. Kit de mise en contact (1) selon la revendication 1 ou 2,
les éléments de mise en contact (3b) du deuxième jeu de mise en contact renfermant m languettes de mise en contact (31b) pour le raccordement au dispositif d'alimentation en énergie d'une part et à m brins du deuxième schéma d'enroulement formé à partir des bobines d'autre part, et un élément de pont (31b-1) formant un point en étoile d'un circuit en étoile et une pluralité d'éléments de pont série (31b-2) ;
le deuxième schéma d'enroulement renfermant n>1 en bobines branchées en série dans chacun des m brins, et pour la réalisation correspondante, les éléments de mise en contact (31b) du deuxième jeu de mise en contact et le corps de support (2) étant configurés de telle manière qu'après insertion des éléments de mise en contact (3b) dans le corps de support (2) :
- chacune des m languettes de mise en contact (31b) est exposée sur l'une des positions définies sur la surface extérieure du corps de support (2) pour venir en contact avec les extrémités faisant saillie,
- l'élément de pont formant un point en étoile (32b-1) est exposé sur m positions définies sur la surface extérieure du corps de support pour venir en contact avec les extrémités faisant saillie, et
- chacun des éléments de pont série (32b-2) est exposé sur deux positions définies sur la surface extérieure du corps de support pour venir en contact avec les extrémités faisant saillie.

4. Kit de mise en contact (1) selon l'une des revendications précédentes,
les éléments de mise en contact du troisième jeu de mise en contact renfermant m languettes de mise en contact (31c) pour le raccordement au dispositif d'alimentation en énergie d'une part et à m brins du troisième schéma d'enroulement formé à partir des bobines d'autre part, et m éléments de pont de raccordement (32c) :
le troisième schéma d'enroulement renfermant un circuit en triangle et renfermant n>1 bobines branchées en parallèle sur chacun des m brins, et
pour la réalisation correspondante du troisième schéma d'enroulement, les éléments de mise contact du troisième jeu de mise en contact et le corps de support (2) étant configurés de telle manière qu'après insertion des éléments de mise en contact dans le corps de support (2) :
- chacune des m languettes de mise en contact (31c) est exposée sur n des positions définies sur la surface extérieure du corps de support (2) pour venir en contact avec les extrémités faisant saillie, et
- chacun des m éléments de pont de raccordement (32c) est en contact avec l'une des m languettes de mise en contact et est exposé sur n des positions définies sur la surface extérieure du corps de support (2) pour venir en contact avec les extrémités faisant saillie.

5. Kit de mise en contact (1) selon l'une des revendications précédentes,
les éléments de mise en contact du quatrième jeu de mise en contact renfermant m languettes de mise en contact (31d) pour le raccordement au dispositif d'alimentation en énergie d'une part et à m brins d'autre part, et une pluralité d'éléments de pont série (32d) ;
le quatrième schéma d'enroulement étant un circuit en triangle et renfermant n>1 bobines branchées en série dans chacun des m brins ; et
pour la réalisation correspondante du quatrième schéma d'enroulement, les éléments de mise en contact (3d) du quatrième jeu de mise en contact et les corps de support (2) étant configurés de telle manière qu'après insertion des éléments de mise en contact (3d) dans le corps de support (2) :
- chacune des m languettes de mise en contact (31d) est exposée sur deux des positions définies sur la surface extérieure du corps de support (2) pour venir en contact avec les extrémités faisant saillie, et
- chacun des éléments de pont série (32d) est exposé sur deux des positions définies sur la surface extérieure du corps de support (2) pour venir en contact avec les extrémités faisant saillie.

6. Kit de mise en contact (1) selon l'une des revendications précédentes,
le corps de support (2) renfermant m ouvertures pour les m languettes de mise en contact (31a, 31b, 31c, 31d), dans lesquelles les languettes de mise en contact (31a, 31b, 31c, 31d) sont introduites dans une direction prédéfinie, les languettes de mise en contact (31a, 31b, 31c, 31d) comportant des sections pliées qui, après l'introduction des languettes de mise en contact (31a, 31b, 31c, 31d), sont exposées sur la surface extérieure sur les positions définies correspondantes, et les éléments de pont (32a, 32b, 32c, 32d) étant insérés dans les ouvertures du corps de support après l'introduction des languettes de mise en contact (31a, 31b, 31c, 31d) de telle manière qu'ils s'étendent dans un plan décalé par rapport aux languettes de mise en contact, croisent les languettes de mise en contact (31a, 31b, 31c, 31d) et sont exposés sur des positions correspondantes des positions définies.

7. Procédé de fabrication de machines électriques de différentes classes de puissance, qui comporte des étapes suivantes :
i. fourniture d'une pluralité de stators (M1), qui sont à associer chacun à une des différentes classes de puissance, en particulier en ce qu'ils possèdent des longueurs de stator différentes le long de leur axe longitudinal respectif ;
ii. rentrage dans chacun des stators (M1) d'un nombre égal de bobines, de telle manière que des extrémités de chacune des bobines sont présentes sur un côté frontal du stator (M1) respectif ;
iii. guidage des extrémités présentes sur le côté frontal du stator (M1) respectif de telle manière que les extrémités adoptent un agencement prédéfini, l'agencement prédéfini pour les enroulements rentrés de chacun des stators (M1) étant réalisé de manière identique ;
iv. prévision d'un kit de mise en contact (1) selon l'une quelconque des revendications 1 à 6 ;
v. établissement d'un schéma d'enroulement différent pour chacune des différentes classes de puissance en insérant les jeux de mise en contact correspondants dans le corps de support (2) respectif et en les raccordant à l'agencement prédéfini correspondant des extrémités des enroulements du stator (M1) respectif.

8. Procédé selon la revendication 7,
dans l'étape ii. des enroulements de tige étant rentrés dans les stators (M1), et
dans l'étape iii., l'agencement prédéfini étant réalisé en ce que les extrémités des enroulements de tige sont pliées et restent stationnaires par autostabilité des enroulements de tige dans l'agencement prédéfini.

9. Procédé selon la revendication 8,
dans l'étape iii., les extrémités étant pliées et tordues de telle manière que les extrémités sont disposées conformément à l'agencement prédéfini dans deux plans parallèles l'un à l'autre.
